**Europäisches Patentamt**

**European Patent Office**

**Office européen des brevets**

(19)

(11) Veröffentlichungsnummer : **0 251 279 B1**

(12) **EUROPÄISCHE PATENTSCHRIFT**

(45) Veröffentlichungstag der Patentschrift :
08.05.91 Patentblatt 91/19

(51) Int. Cl.$^5$ : **F16G 15/06, F16G 15/00**

(21) Anmeldenummer : **87109336.5**

(22) Anmeldetag : **29.06.87**

(54) **Bauteil zum Zusammenstellen von Kettengeschirren aus Rundgliederketten gestufter Nenndicken.**

(30) Priorität : 28.06.86 DE 3621725

(43) Veröffentlichungstag der Anmeldung :
07.01.88 Patentblatt 88/01

(45) Bekanntmachung des Hinweises auf die
Patenterteilung :
08.05.91 Patentblatt 91/19

(84) Benannte Vertragsstaaten :
BE DE FR IT NL

(56) Entgegenhaltungen :
DE-A- 3 012 886
GB-A- 1 469 553
GB-A- 2 180 911

(73) Patentinhaber : Becker-Prünte GmbH
August-Becker-Strasse 10
W-4354 Datteln Westfalen (DE)

(72) Erfinder : Rast, Jürgen
Büscherstrasse 65
W-4355 Waltrop (DE)

(74) Vertreter : Herrmann-Trentepohl, Werner,
Dipl.-Ing. et al
Schaeferstrasse 18
W-4690 Herne 1 (DE)

## Beschreibung

Die Erfindugn betrifft ein Bauteil zum Zusammenstellen von Kettengeschirren aus Rundgliederketten gestufter Nenndicken gemäß dem Oberbegriff des Patentanspruches 1.

Das erfindungsgemäße Bauteil wird mit Hilfe seines Haltebolzens mit der zu ihm passenden Rundgliederkette formschlüssig verbunden und bildet dann zusammen mit der Kette mindestens einen Teil des Geschirrs. Insbesondere handelt es sich bei dem erfindungsgemäßen Bauteil um einen Schäkel oder einen Haken. Häufig sind solche Bauteile mit den dazugehörigen Ketten in unterschiedlichen Abmessungen bei einem Benutzer vorhanden, der dann über einen Kettengeschirr-Baukasten verfügt, mit dem er Kettengeschirre unterschiedlicher Tragfähigkeit nach Bedarf zusammensetzen kann.

Erfindungsgemäß ist das neue Bauteil geeignet, Verwechslungen von Bauteilen eines Kettengeschirrs unterschiedlicher Tragfähigkeit und deswegen unterschiedlicher Dimensionierung zu verhindern. Hierbei schließt die Kalibrierung des Einführungsspaltes die Verwendung des Bauteils mit einer Kette der nächst höheren Nenndicke aus. Das gilt auch für den dazugehörigen Haltebolzen, weil dieser einen Durchmesser aufweist, der das Einführen des Haltebolzens in die Haltebolzenaussparung des Bauteiles verhindert. Zwar läßt sich in den Einführungsspalt ein Kettenglied der nächst niedrigeren Nenndicke einführen. Auch paßt der Haltebolzen, der zu dem dazugehörigen Bauteil paßt, in die Haltebolzenaussparung desjenigen Bauteils, das für den Haltebolzen der nächst höheren Kettennenndicke vorgesehen ist.

Der falsche Haltebolzen ist jedoch an einer Seite des Ketteneinführungsspaltes in der Haltebolzenaussparung nicht gesichert, weil der Haltebolzenanschlag den zu klein dimensionierten Haltebolzen passieren läßt. Dadurch wird verhindert, daß ein richtig eingebautes Bauteil mit einem zu schwachen Haltebolzen und/oder einer zu schwachen Rundgliederkette gekoppelt werden kann.

Derartige Bauteile aollen die Überlastung von Kettengeschirren mit eingebauten unterdimensionierten Organen verhindern und dadurch vor allem die Unfallgefahren ausschließen. Sie setzen andererseits voraus, daß ihre Fertigung durch die beschriebenen Maßnahmen, welche die Verwechslungsfreiheit herbeiführen sollen, einen allenfalls unerheblichen Zusatzaufwand bedeuten.

Die Erfindung geht von einem vorbekannten Bauteil mit den eingangs bezeichneten Merkmalen aus (DE-A-3 012 886). Hierbei wird die Aussparung mit einer Stufenbohrung hergestellt, deren kleinster Durchmesser größer als das jeweilige 1/f-fache des Durchmessers des richtigen Haltebolzen ist, wobei f das Vielfache bedeutet, mit dem sich die aufeinander folgenden Nenndicken der Rundgliederketten voneinander unterscheiden. Ferner weisen beide Enden des jeweiligen Haltebolzens Führungsköpfe auf, welche mit der abgefasten Stufe der Bohrung zusammenwirken, die die Haltebolzenaussparung bildet. Dadurch soll erreicht werden, daß ein zu der Kette mit nächst kleinerer Nenndicke passender Haltebolzen die Stufe der Bohrung in der Aussparung überwinden und in die Bohrung mit dem kleineren Durchmesser gelangen kann.

Die Herstellung einer Stufenbohrung der bekannten Art in den in der Regel geschmiedeten und gelochten Bauteilen ist ein außerordentlich aufwendiger Arbeitsvorgang, dessen Ergebnis außerdem nur schwer kontrollierbar, aber für die spätere Funktion der Verwechslungsfreiheit entscheidend ist. Auch das beidseitige Andrehen passender Führungsköpfe an den Haltebolzen macht die Herstellung aufwendig, weil genormte, abgefaste Bolzen nicht verwendbar sind. Es kommt hinzu, daß das Stufenmaß vorgegeben ist und damit die Größe der Anschlagfläche bestimmt ; welche der zu kleine Haltebolzen überwinden muß, um in die Bohrung mit dem geringeren Durchmesser und dadurch von selbst aus der Aussparung herauszugelangen. Daher versagt die Verwechslungsfreiheit bei unterdimensionierten Bolzen leicht. Schließlich hat sich ergeben, daß die Haltebolzenaussparung selbst unter den üblichen Betriebsbedingungen gefährlichen Veränderungen unterliegt. Solche Bauteile werden normalerweise unter schmutzigen äußeren Bedingungen aufbewahrt und verwendet, insbesondere wenn die Kettengeschirre im Untertagebetrieb eingesetzt werden. Korrodierende Einflüsse aggressiver Wässer treten zusätzlich auf. Das führt dazu, daß an der Stufe der Bohrung häufig Verkrustungen auftreten, welche den zu klein dimensionierten Haltebolzen daran hindern, in die Bohrung mit dem kleineren Durchmesser von selbst zu gelangen, was ebenfalls ein Versagen der Verwechslungsfreiheit zur Folge hat.

Der Erfindung liegt die Aufgabe zugrunde, an einem Bauteil der als bekannt vorausgesetzten Art auf einfache Weise für eine zuverlässigere Verwechslungsfreiheit zu sorgen.

Diese Aufgabe löst die Erfindung mit den Merkmalen des Patentanspruches 1. Zweckmäßige Ausführungsformen der Erfindung sind Gegenstand der Unteransprüche.

Gemäß der Erfindung hat die Haltebolzenaussparung einen durchgehend gleichen lichten Durchmesser, der dem richtigen Haltebolzen entspricht. Dadurch ist es möglich, die Bearbeitung des Bauteils zur Herstellung der Haltebolzenaussparung zu vereinfachen. Eine der Üblichen lochungen kann genügen, bzw. reicht ein einfaches Aufbohren einer solchen Lochung aus. Da erfindungsgemäß Sperrzylinder in geringer Anzahl oder als Einzelteil für den Anschlag Verwendung finden, ist die Größe der Anschlagfläche praktisch von der für den Durchlaß des falschen Haltebolzens notwendigen Einschränkung des lichten Querschnittes der Haltebolzenaussparung unabhängig. Unter praktischen Bedingungen kommt es zu einer einfachen oder mehrfachen linienweisen Berührung der Sperrzylindermantelflächen mit dem Haltebolzenkopf. Den hierdurch bedingten Widerstand vermag der zu gering dimensionierte Haltebolzen leicht zu überwinden. Außerdem werden dadurch Ansammlungen von Verschmutzungen am Anschlag der Aussparung vermieden, welche zum Versagen der Verwechslungsfreiheit führen könnten. Daher ist sowohl im neuen wie im gebrauchten Zustand die Verwechslungsfreiheit gewährleistet. Das Einsetzen des Sperrzylinders ist wegen der ohnehin auf der anderen Seite des Kettengliedeinführungsspaltes anzubringenden Bohrung für die Haltebolzensicherung problemlos.

Die Erfindung hat den Vorteil, daß sie bei stark vereinfachter Herstellung des Bauteiles eine zuverlässig wirkende.

Verwechslugsfreiheit gewährleistet. Die erfindungsgemäßen Bauteile kommen in der Regel mit Normenbolzen aus, die an ihren Enden abgefast sind und besonders angearbeitete Haltebolzenköpfe erübrigen.

Vorzugsweise und mit den Merkmalen des Patentanspruches 2 wird der Anschlag mit einem Sperrzylinder verwirklicht. Der hierzu dienende, eingesprengte Federring schränkt den lichten Durchmesser der Haltebolzenaussparung so geringfügig, d.h. so wenig wie möglich ein und hat deswegen eine sehr geringe Anschlagfläche, die außerdem noch konvex gewölbt ist, Dadurch ist das Passieren des Haltebolzens bei zu geringer Dimensionierung begünstigt.

Bei der Ausführungsform nach dem Patentanspruch 3 verwendet man dagegen mehrere Sperrzylinder für den Anschlag, verwirklicht diese aber mit Stiften, die in ihnen zugeordnete Bohrungen des Kettenanschlußkopfes eingeschlagen werden. Von den üblichen Stiftsicherungen der Haltebolzen unterscheidet sich diese Ausführungsform dadurch, daß der Haltebolzen nicht wie bekannt mit einer eingestochenen Nut zur Aufnahme der Stifte versehen wird. Stattdessen wirkt der Haltebolzenpopf mit der Stiftoberfläche zusammen.

Zum besseren Verständnis der Erfindung werden im folgenden Ausführungsformen beschrieben, welche anhand der Figuren in der Zeichnung erläutert werden ; es zeigen

Figur 1 ein Bauteil gemäß einer ersten Ausführungsform der Erfindung, wobei links die beiden Schenkel des Bauteils im Querschnitt und rechts in Draufsicht wiedergegeben sind,
Figur 2 eine andere Ausführungsform der Erfindung in der Figur 1 entsprechender Darstellung und

Figur 3 eine weitere Ausführungsform der Erfindung in den Figuren 1 und 2 entsprechender Darstellung.

Bei dem in den Figuren dargestellten Bauteil handelt es sich jeweils um einen Kettendchäkel (1). Er dient zusammen mit anderen über- bzw. unterdimensionierten Bauteilen zum Zusammenstellen von Kettengeschirren aus Rundgliederketten gestufter Nennweiten. Dabei ist das Bauteil (1) für eine Kette bestimmter Nennweite vorgesehen. Zum Kuppeln des Schäkels (1) dient ein Anschlußkopf, der Allgemein mit (2) bezeichnet ist und von den beiden im wesentlichen parallelen Schäkelschenkeln (3 bzw. 4) gebildet wird. Der Anschlußkopf hat eine ihn durchsetzende Haltebolzenaussparung (5), welche entsprechend der Zweiteiligkeit des Kettenanschlußkopfes (2) aus zwei miteinander fluchtenden Abschnitten (6 bzw. 7) besteht. Zwischen den beiden Schenkeln (3, 4) befindet sich ein Ketteneinführungsspalt (8), in den sich ein Kettenglied derart einführen läßt, daß seine Öffnung mit den Aussparungen (6 und 7) fluchtet. Das Kettenglied ist nicht dargestellt.

Das Bauteil weist ferner einen zylindrischen Haltebolzen (9) auf, welcher sich von der mit (10) bezeichneten Seite her in die Aussparung (5) einführen und dabei durch das in den Spalt (8) eingelegte Kettenglied hindurchführen läßt. An dieser mit (10) bezeichneten Seite des Spaltes (5) ist eine Haltebolzensicherung vorgesehen, die in den beiden Darstellungen wiedergegeben ist. Hierbei handelt es sich um eine Querbohrung (11), die von der Aussparung (6) unterbrochen ist und um einen Schwerspannstift (12) der in die Querbohrung eingetrieben wird und vor den sich der Kopf (13) des Haltebolzens (9) legt, welcher dadurch formschlüssig gesichert ist.

In der Aussparung (5), nämlich im Abschnitt (7) des Schenkels (4) auf der gegenüberliegenden Seite (14) befindet sich ein Haltebolzenanschlag (15).

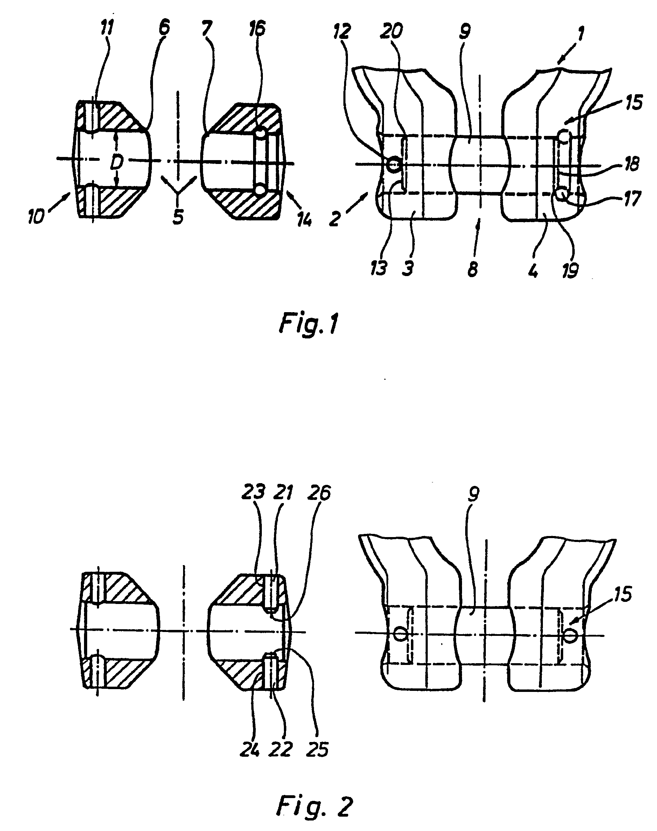

Gemäß dem Ausführungsbeispiel der Figur 1 weist dieser Anschlag eine eingestochene Ringnut (16) und einen Sperrzylinder auf, der als ein in die Nut (16) eingesprengter Federring (17) ausgebildet ist. Der Haltebolzen setzt sich mit seinem Kopf (18), welcher dem Kopf (13) gegenüberliegt und ebenso wie dieser bei (19 und 20) abgefast ist, vor die konvexe Teilfläche, mit der der eingesprengte Federring (17) in den lichten Querschnitt (D) der Aussparung (5) vorsteht. Wie sich aus der Darstellung aller Figuren ergibt, ist die Haltebolzenaussparung (5) auf beiden Seiten des Kettengliedeinführungsspaltes (8) durchgehend mit einem konstanten lichten Durchmesser (D) versehen, der dem passenden Haltebolzen (9) entspricht.

Während in der Ausführungsform nach Figur 1 der Anschlag (15) aus einem Sperrzylinder, nämlich dem Federring (17) besteht, der kraftschlüssig in die eingestochene Nut (16) eingesetzt ist, besteht der Anschlag (15) für den Haltebolzen (9) in der Ausführungsform nach Figur 2 aus zwei Sperrzylindern (21 bzw. 22) in Form von kraftschlüssig in fluchtende Querbohrungen (23, 24) eingetriebenen Stiften mit nach innen vorstehenden abgefasten Köpfen (25 bzw. 26).

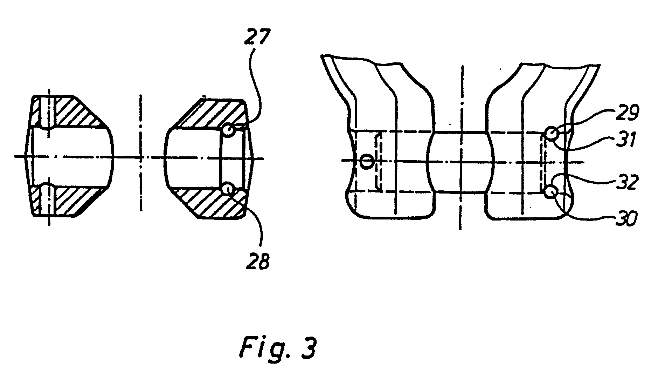

Während in der Ausführungsform nach Figur 2 die Querbohrungen (23, 24) radial angeordnet sind, handelt es sich bei der Aubführungsform nach Figur 3 um tangential angeordnete Querbohrungen (27, 28) mit eingetriebenen Stiften (29, 30). Statt der abgefasten Köpfe (25, 26) bilden die Stifte (29, 30) mit ihren konvexen Teilflächen (31, 32) ihrer Zylinder zusammen die Anschlagfläche.

Die Verwechslungsfreiheit des Bauteiles (1) ist wie folgt gegeben :

Wie erwähnt paßt zu dem Kaliber des Spaltes (8) eine Kette mit der Nenndicke (dn). Zu dieser Kette paßt auch ein bestimmter Haltebolzen mit einem dem Durchmesser (D) entsprechenden Durchmesser. Wird in den Spalt (8) eine Kette mit einer nächst kleineren Nenndicke (dn-1) eingeführt, so paßt der Haltebolzen (9) nicht in die Kette. Wird der zu der Kette passende Haltebolzen eingeführt, der dementsprechend einen Durchmesser (d) aufweist, so passiert dieser den Anschlag (15), der zwar den richtigen Haltebolzen mit dem dem Durchmesser (D) entsprechenden Durchmesser sperrt, den verwechselten Haltebolzen aber durchläßt. Im Falle des Federrings (17) wird die dazu erforderliche Kalibrierung des Anschlages (15) mit dem Durchmesser des Sperrzylinders hergestellt. Bei der Ausführungsform nach Figur 2 besteht die Kalibrierung aus dem Maß, mit dem die Köpfe (25, 26) der beiden Stifte (21, 22) in die Aussparung (7) vorstehen.

Im Falle des Ausführungsbeispieles nach Figur 3 bestimmt die tangentiale Zuordnung der Stiftebohrungen (27, 28) die Kalibrierung des Anschlages.

Da der verwechselte Haltebolzen der nächst kleineren Kettennenndicke (dn-1) den Anschlag (15) passieren kann, rutscht er noch seiner Einführuag in das Ende (10) am Ende (14) heraus. Der richtige Heltebolzen (9) wird dagegen wie beschriben vom Anschlag (15) festgehalten und kann nur durch das Ende (10) eingeführt und aus dem Ende (10) auch wieder herausgenommen werden.

## Ansprüche

1. Bauteil (1) zum Zusammenstellen von Kettengeschirren aus Rundgliederketten gestufter Nenndicken, das einen Kettenanschlußkopf (2) mit einer diesen durchsetzenden Haltebolzenaussparung (5), einem Kettengliedeinführungsspalt (8), einem ein eingeführtes Kettenglied durchsetzenden Haltebolzen (9), einer an einer Seite (10) des Einfürungsspaltes (8) angeordneten Haltebolzensicherung (11, 12) und einem Haltebolzenanschlag (15) an der anderen Seite (14) des Einführungsspaltes (8) aufweist, wobei zur Vermeidung von Verwechslungen des zu der zu dem Spaltkaliber passenden Kette gehörrenden Haltebolzens (9) mit einem zu der Kette mit nächst kleinerer Nenndicke passenden Haltebolzen in der Haltebolzenaussparung (5) ein Haltebolzenanschlag (15) vorgesehen ist, der den richtigen Haltebolzen (9) axial sperrt und den verwechselten Haltebolzen durchläßt, **dadurch gekennzeichnet**, daß die Haltebolzenaussparung (5) auf beiden Seiten (10, 14) des Ketteneinführungsspaltes (8) durchgehend einen lichten Durchmesser (D) aufweist, der dem richtigen Haltebolzen (9) entspricht, und daß der Haltebolzenanschlag (15) aus einem oder mehreren Sperrzylindern (17, 21, 22, 29, 30) besteht, welche in Aussparungen (16, 23, 24, 27, 28) des Kettenanschlußkopfes (2) eingesetzt sind und den lichten Querschnitt (D) der Haltebolzenaussparung (5) einschränken.

2. Bauteil nach Anspruch 1, **dadurch gekennzeichnet**, daß der Haltebolzenanschlag (15) eine eingestochene Nut (16) aufweist und der Sperrzylinder ein in die Nut eingesprengter Federring (17) ist.

3. Bauteil nach Anspruch 1, **dadurch gekennzeichnet**, daß die Sperrzylinder ein Paar von Stiften (21, 22, 29, 30) sind, für die Bohrungen (23, 24, 27, 28) im Kettenanschlußkopf (2) vorgesehen sind, welche bezüglich der Haltebolzenaussparung (5) um einen Halbkreis versetzt angeordnet sind.

4. Bauteil nach Anspruch 3, **dadurch gekennzeichnet**, daß die Stifte (21, 22) radial zur Haltebolzenaussparung (5) angeordnet sind und ihre Bohrungen (23, 24) fluchten.

5. Bauteil nach Anspruch 3, **dadurch gekennzeichnet**, daß die Stifte (29, 30) tangential angeordnet sind und ihre Bohrungen (27, 28) parallel verlaufen.

## Claims

1. A component (1) for assembling chain apparatus from round link chains of graded nominal thicknesses which has a chain connecting head (2) with a connecting pin opening (5) extending therethrough, a chain link insertion aperture (8), a connecting pin (9) passing through an inserted chain link, a connecting pin protector (11, 12) arranged on one side (10) of the insertion aperture (8) and a connecting pin stop (15) on the other side (14) of the insertion aperture (8), whereby, in order to obviate confusion of the connecting pin (9) belonging to the chain suitable for the size of aperture with a connecting pin suitable for the chain with the next smallest nominal thickness in the connecting pin opening (5), a connecting pin stop (15) is provided which locks the correct connecting pin (9) axially and allows passage of the incorrect connecting pin therethrough, characterised in that the connecting pin opening (5) has a clear diameter (D) continuously on both sides (10, 14) of the chain insertion aperture (8) which corresponds to the correct connecting pin (9) and that the connecting pin stop (15) consists of one or more locking cylinders (17, 21, 22, 29, 30) which are inserted into openings (16, 23, 24, 27, 28) in the chain connecting head (2) and restrict the clear cross-section (D) of the connecting pin opening (5).

2. A component according to Claim 1, characterised in that the connecting pin stop (15) has a recessed groove (16) and the locking cylinder is a resilient ring (17) sprung into the groove.

3. A component according to Claim 1, characterised in that the locking cylinders are a pair of pins (21, 22, 29, 30) for which bores (23, 24, 27, 28) are provided in the chain connecting head (2) which are arranged offset about a semi-circle in relation to the connecting pin opening (5).

4. A component according to Claim 3, characterised in that the pins (21, 22) are arranged radially to the connecting pin opening (5) and their bores (23, 24) are in line.

5. A component according to Claim 3, characterised in that the pins (29, 30) are arranged tangentially and their bores (27, 28) run parallel.

## Revendications

1. Composant (1) pour réaliser des systèmes de chaînes à maillons ronds de calibres échelonnés, comportant une tête (2) destinée à se monter sur une chaîne et traversée par un trou (5) prévu pour recevoir un axe d'assemblage (9), cette tête présentant une fente d'introduction (8) dans laquelle on peut engager un maillon de la chaîne que traverse l'axe d'assemblage (9), un système de retenue (11, 12) disposé d'un côté (10) de la fente d'introduction (8) pour retenir l'axe d'assemblage, et une butée d'arrêt (15) de l'axe d'assemblage disposée de l'autre côté (14) de la fente d'introduction (8), des moyens étant prévus pour éviter une confusion par rapport à l'axe d'assemblage correct (9), prévu avec la chaîne correspondant au calibre de la fente d'introduction en prenant par erreur un autre axe d'assemblage correspondant à une chaîne de calibre immédiatement inférieur, ces moyens comportant une butée d'arrêt (15) qui bloque dans le sens axial l'axe d'assemblage correct (9) mais laisse passer l'autre axe d'assemblage monté par erreur,
caractérisé en ce que,
le trou (5) prévu pour le montage de l'axe d'assemblage présente de bout en bout, des deux côtés (10, 14) de la fente d'introduction (8) de la chaîne, un diamètre libre (D) qui correspond à celui de l'axe d'assemblage correct (9), et en ce que la butée d'arrêt (15) prévue pour retenir l'axe d'assemblage est constituée par un ou plusieurs arrêtoirs cylindriques (17, 21, 22, 29) montés dans des logements (16, 23, 24, 27, 28) ménagés dans la tête de liaison (2) destinée à se monter sur la chaîne, ces arrêtoirs limitant la cote diamétrale libre (D) du trou de montage (5) prévu pour recevoir l'axe d'assemblage.

2. Composant selon la revendication 1,
caractérisé en ce que,
la butée (15) prévue pour retenir l'axe d'assemblage comporte une gorge creuse (16), l'arrêtoir cylindrique étant constitué par une bague élastique (17) montée à force dans la gorge.

3. Composant selon la revendication 1,
caractérisé en ce que,
l'arrêtoir cylindrique est constitué par une paire de goupilles (21, 22, 29, 30) pour lesquelles des perçages (23, 24, 27, 28) sont prévus dans la tête de liaison (2) destinée à se monter sur la chaîne, ces perçages étant décalés d'un demi-cercle par rapport au trou de montage (5) de l'axe d'assemblage.

4. Composant selon la revendication 3,
caractérisé en ce que,
les goupilles sont des doigts d'arrêt (21, 22) qui sont disposés radialement par rapport au trou de montage (5) de l'axe d'assemblage, leurs perçages (23, 24) étant alignés l'un sur l'autre.

5. Composant selon la revendication 3,
caractérisé en ce que,
les goupilles (29, 30) sont disposées tangentiellement, leurs perçages (27, 28) étant parallèles.

Fig. 1

Fig. 2

27

29
31
32
30

28

*Fig. 3*